(19) Europäisches Patentamt
European Patent Office
Office européen des brevets

(11) EP 3 878 578 A1

(12) EUROPÄISCHE PATENTANMELDUNG

(43) Veröffentlichungstag:
15.09.2021 Patentblatt 2021/37

(51) Int Cl.:
B22F 1/00 (2006.01)     B22F 3/105 (2006.01)

(21) Anmeldenummer: 20162653.8

(22) Anmeldetag: 12.03.2020

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Heraeus Additive Manufacturing
GmbH
63450 Hanau (DE)

(72) Erfinder:
• Bauereiß, Andreas
  63450 Hanau (DE)
• Panigoro, Priscila
  63450 Hanau (DE)

(74) Vertreter: Heraeus IP
Heraeus Holding GmbH
Intellectual Property
Heraeusstraße 12-14
63450 Hanau (DE)

(54) **METALLPULVERZUSAMMENSETZUNG ZUR VERWENDUNG FÜR EIN ADDITIVES FERTIGUNGSVERFAHREN**

(57) Die Erfindung betrifft eine Metallpulverzusammensetzung enthaltend Metallpulver aufweisend eine Partikelgrößenverteilung mit einem $d_{10}$- Wert von 1 $\mu$m oder mehr und einem $d_{90}$- Wert von 200 $\mu$m oder weniger und mindestens eine wasserlösliche Verbindung, wobei die Verbindung in festem Zustand vorliegt. Weiterhin betrifft die Erfindung die Verwendung der Metallpulverzusammensetzung in einem additiven Fertigungsverfahren.

**Beschreibung**

Die vorliegende Erfindung betrifft eine Metallpulverzusammensetzung, die geeignet ist zur Verwendung in einem additiven Fertigungsverfahren, ein Verfahren zur Herstellung der Metallpulverzusammensetzung sowie die Verwendung der Metallpulverzusammensetzung für ein additives Fertigungsverfahren.

Additive Fertigungsverfahren von Metallbauteilen, umgangssprachlich auch 3D-Druck genannt, etablieren sich immer weiter als vielseitige Herstellungsmethode. Insbesondere bei der Herstellung von Bauteilen mit komplexen Geometrien ergeben sich klare Vorteile. Additive Fertigungsverfahren erlauben zum Teil sogar Konstruktionen von Bauteilen, die bisher nicht oder nur mit erheblichem Aufwand hergestellt werden konnten. Zum Beispiel können im Bereich Leichtbau Strukturen realisiert werden, bei denen nur die lasttragenden Bereiche eines Bauteils gefertigt werden. Die Folge kann eine erhebliche Materialeinsparung sein.

In der Norm EN ISO/ASTM 52921:2017 werden die additiven Fertigungsverfahren in Kategorien eingeteilt. Für die additive Fertigung metallischer Formkörper eignen sich beispielsweise:

- "Powder Bed Fusion" (Pulverbett-basierte Verfahren): Additives Fertigungsverfahren, bei dem durch einen örtlich selektiven Energieeintrag (z.B. durch einen Laserstrahl oder einen Elektronenstrahl) definierte Bereiche in einem Pulverbett verschmolzen werden;
- "Directed Energy Deposition": Additives Fertigungsverfahren, bei dem gebündelte thermische Energie genutzt wird, um Materialien an ihrem Aufbringungsort durch Verschmelzen miteinander zu verbinden;
- "Binder Jetting": Additives Fertigungsverfahren, bei dem ein flüssiges Bindemittel selektiv aufgetragen wird, um ein Pulver zu verfestigen;
- "Sheet Lamination": Additives Fertigungsverfahren, bei dem Schichten eines Materials flächig verbunden werden, um ein Objekt zu formen.

Eine Übersicht hinsichtlich der additiven Fertigung metallischer Formkörper findet sich bei W.J. Sames et al., International Materials Reviews, 61, 2016, S. 1-46.

Für möglichst dichte Metallbauteile sind Pulverbett-basierte Verfahren die Methoden der Wahl. Unter Pulverbett basierten Verfahren sind insbesondere selektives Laserschmelzen (SLM) selektives Lasersintern (SLS), Elektronenstrahlschmelzen (EBM) und Elektronenstrahlsintern (EBS) zu verstehen. Hierbei werden üblicher Weise einzelne Pulverschichten aufgetragen und bereichsweise miteinander verschmolzen unter Erhalt von einzelnen Materialschichten. Durch Aufeinanderstapeln von gezielt hergestellten Materialschichten können monolithische Bauteile, insbesondere aus Metall, erhalten werden.

Viele Metalle und Legierungen lassen sich heute schon mit diesen Verfahren zu dichten Bauteilen verarbeiten.

Schwierigkeiten ergeben sich jedoch insbesondere beim selektiven Laserschmelzen von Metallen, die Infrarotlicht (Wellenlängenbereich 800 nm - 10 $\mu$m) stark reflektieren, wie z.B. Kupfer, Silber und Gold. Typische Fertigungsanlagen zum selektiven Laserschmelzen oder - sintern verwenden Laserlicht in diesem Wellenlängenbereich. Solche Metalle lassen sich mit üblichen Lasern im Infrarotbereich nur schlecht verarbeiten. Abhilfen können zwar prinzipiell Laser im sichtbaren Bereich des Lichts schaffen, jedoch sind diese sehr teuer und apparativ aufwändig.

Weitere Hindernisse bei der Verarbeitung von Metallen ergeben sich dadurch, dass Metalle an ihrer Oberfläche häufig eine Metalloxidschichten aufweisen, die höheren Schmelztemperaturen aufweisen als die jeweils zu Grunde liegenden Metalle der Pulver. Aufgrund der hohen Oberfläche von Pulvern wirken sich Metalloxide auf der Partikeloberfläche besonders nachteilig auf das Fertigungsergebnis aus. So wird durch mit Metalloxid verunreinigte Metallpartikel besonders viel Sauerstoff in das zu fertigende Bauteil eingetragen. Der hohe Sauerstoffgehalt im additiv gefertigten Bauteil kann z.B. die mechanischen Eigenschaftes des Materials negativ beeinflussen. Daher ist es häufig wünschenswert, den Sauerstoffgehalt in einem gefertigten Metallbauteil zu reduzieren.

Generell ist es die Aufgabe der vorliegenden Erfindung, mindestens einen der aus dem Stand der Technik bekannten Nachteile zumindest teilweise zu überwinden.

Eine weitere Aufgabe der Erfindung besteht darin, eine Metallpulverzusammensetzung bereitzustellen, die verbesserte Absorptionseigenschaften für Strahlung im Infrarotbereich aufweist.

Eine weitere Aufgabe der Erfindung besteht darin, eine Metallpulverzusammensetzung bereitzustellen, die ein verbessertes Aufschmelzverhalten gegenüber unbehandelten Metallpulvern aufweist.

Eine weitere Aufgabe der Erfindung besteht darin, eine Metallpulverzusammensetzung bereitzustellen, die zu einem verringerten Sauerstoffgehalt in einem additiv gefertigten Bauteil führt, verglichen mit unbehandelten Metallpulvern.

Eine weitere Aufgabe der Erfindung besteht darin, ein Verfahren zur Herstellung einer verbesserten Metallpulverzusammensetzung bereitzustellen.

Ein Beitrag zur Lösung von mindestens einer der oben genannten Aufgaben wird durch die Gegenstände der Kategorie-bildenden Ansprüche geleistet. Die abhängigen Teilausführungen der Kategorie-bildenden Ausführungsformen stellen bevorzugte Ausführungsformen der Erfindung dar, deren Gegenstände auch einen Beitrag zur Lösung mindestens eines der oben genannten Objekte leisten.

Bevorzugte Ausführungsformen:

I. Metallpulverzusammensetzung, insbesondere zur Verwendung in einem additiven Fertigungsverfahren für ein Bauteil, enthaltend oder bestehend aus:

a) Metallpulver aufweisend eine Partikelgrößenverteilung mit einem $d_{10}$- Wert von 1 $\mu$m oder mehr und einem $d_{90}$- Wert von 200 $\mu$m oder weniger und

b) mindestens eine wasserlösliche Verbindung, wobei die Verbindung in festem Zustand vorliegt.

II. Metallpulverzusammensetzung gemäß Ausführungsform I, wobei die wasserlösliche Verbindung ausgewählt ist aus der Gruppe bestehend aus organischen und anorganischen Verbindungen.

III. Metallpulverzusammensetzung gemäß einer der Ausführungsformen I oder II, wobei die Metallpulverzusammensetzung zwei oder mehr wasserlösliche Verbindungen aufweist.

IV. Metallpulverzusammensetzung gemäß einer der Ausführungsformen I - III, wobei die zwei oder mehr wasserlöslichen Verbindungen mindestens eine organische und eine anorganische Verbindung aufweisen.

V. Metallpulverzusammensetzung gemäß einer der Ausführungsformen I - IV, wobei die mindestens eine wasserlösliche Verbindung Stickstoff enthält oder frei von Stickstoff ist.

VI. Metallpulverzusammensetzung gemäß einer der Ausführungsformen II - V, wobei die mindestens eine wasserlösliche organische Verbindung eine organische Säure oder deren Salz ist.

VII. Metallpulverzusammensetzung gemäß einer der Ausführungsformen I - VI, wobei die mindestens eine wasserlösliche Verbindung eine stickstoffhaltige Verbindung ist, die ausgewählt ist aus der Gruppe bestehend aus Ammoniumsalzen, Aminen und heterozyklischen aromatische Stickstoffverbindungen.

VIII. Metallpulverzusammensetzung gemäß einer der Ausführungsformen I - VII, wobei die mindestens eine wasserlösliche Verbindung ein Salz ist, insbesondere ein Hydrat eines Salzes.

IX. Metallpulverzusammensetzung gemäß der Ausführungsform VII, wobei das Ammoniumsalz ein Ammoniumsalz eines Amins ist, insbesondere Diammonium-EDTA.

X. Metallpulverzusammensetzung gemäß einer der Ausführungsformen VII, wobei das Amin eine Aminosäure ist.

XI. Metallpulverzusammensetzung gemäß einer der Ausführungsformen I - X, wobei die Verbindung ausgewählt ist aus wasserlöslichen, borhaltigen Verbindungen, insbesondere borhaltigen Salzen.

XII. Metallpulverzusammensetzung gemäß einer der Ausführungsformen I - XI, wobei das borhaltige Salz ein Ammoniumsalz ist, insbesondere Ammoniumpentaborat.

XIII. Metallpulverzusammensetzung gemäß einer der Ausführungsformen I - XIII, dadurch gekennzeichnet, dass sie ein borhaltiges Ammoniumsalz und ein organisches Ammoniumsalz aufweist oder enthält.

XIV. Metallpulverzusammensetzung gemäß einer der Ausführungsformen I -XIII, wobei die Metallpulverzusammensetzung Schwefel aufweist.

XV. Metallpulverzusammensetzung gemäß einer Ausführungsform XIV, wobei der Schwefel in Form von Sulfationen vorliegt.

XVI. Metallpulverzusammensetzung gemäß einer der Ausführungsformen I - XV, wobei die mindestens eine wasserlösliche Verbindung mit den Metallpartikeln des Pulvers verbunden ist oder getrennt von den Metallpartikeln vorliegt, insbesondere in Partikelform.

XVII. Metallpulverzusammensetzung gemäß einer der Ausführungsformen I - XVI, wobei die Metallpartikel der Metallpulverzusammensetzung ein Metall aufweisen, das ausgewählt ist aus der Gruppe bestehend aus Cu, V, Nb, Ta, Co, Cr, Mo, W, Ni, Fe, Ti, Al, Mg, Ag Au, Pt, Re, Rh, Ru, und Pd oder aus einem der vorgenannten Metalle bestehen.

XVIII. Metallpulverzusammensetzung gemäß Ausführungsform XVII, wobei die Metallpartikel eine Legierung aufweisen, insbesondere eine Kupferlegierung und besonders bevorzugt eine Kupferlegierung mit mindestens 85 Gew.-% Kupfer.

XIX. Metallpulverzusammensetzung gemäß einer der Ausführungsform XVIII, wobei die Legierung mindestens ein Element aufweist, das ausgewählt ist aus der Gruppe bestehend aus Beryllium, Chrom, Eisen, Kobalt, Magnesium, Mangan, Nickel, Phosphor, Schwefel, Silber, Silizium, Tellur, Titan, Zink, Zinn und Zirconium.

XX. Metallpulverzusammensetzung gemäß einer der vorherigen Ausführungsformen, wobei mindestens 80% der Partikel des Metallpulvers der folgenden Bedingung genügen:

$0,8 \leq d_{min}/d_{max} \leq 1,0$;

wobei $d_{min}$ der minimale Durchmesser und $d_{max}$ der maximale Durchmesser eines Partikels sind.

XXI. Metallpulverzusammensetzung gemäß einer der Ausführungsformen I - XX, wobei die Menge der mindestens einen wasserlöslichen Verbindung im festen Zustand in einer Menge im Bereich von 100 ppm bis 8000 ppm liegt, bezogen auf das Gewicht der Metallpulverzusammensetzung.

XXII. Metallpulverzusammensetzung gemäß einer der Ausführungsformen I - XXI, wobei die wasserlösliche Verbindung eine Absorptionsbande für elektromagnetischer Strahlung im Wellenlängenbereich von 800 nm - 10 $\mu$m aufweist.

XXIII. Verfahren zur Herstellung einer Metallpulverzusammensetzung gemäß einer der Ausführungsformen I- XXII aufweisend die Schritte:

a) Bereitstellen eines Metallpulvers aufweisend eine Partikelgrößenverteilung mit einem $d_{10}$- Wert von 1 $\mu$m oder mehr und einem $d_{90}$- Wert von 200 $\mu$m oder weniger,

b) Bereitstellen einer wässrigen Lösung aufweisend mindestens eine vollständig gelöste Verbindung,

c) Mischen der Lösung mit dem Pulver unter Erhalt einer Mischung, und

d) Trocknen der Mischung unter Erhalt der Metallpulverzusammensetzung.

XXIV. Verfahren gemäß Ausführungsform XXII, wobei das Mischen durch ein Verfahren erfolgt, das ausgewählt ist aus der Gruppe bestehend aus Rühren, Verreiben, Schütteln, Schleudern und Umwälzen.

XXV. Verfahren gemäß Ausführungsform XXII oder XXIII, wobei das Gewicht wasserlöslichen Verbindung in der Metallpulverzusammensetzung dem Gewicht des Feststoffanteils in der Lösung mit einer Genauigkeit von 90% oder mehr entspricht.

XXVI. Verfahren gemäß einer der Ausführungsformen XXII - XXIV, wobei die Lösung mindestens eine Substanz aufweist, die ausgewählt ist aus der Gruppe bestehend aus Schwefelsäure und Sulfat-Salz, insbesondere einem korrespondierend Metall-Sulfat zu dem Metallpulver.

XXVII. Additives Fertigungsverfahren zur Herstellung eines Bauteils aufweisend die Schritte:

a) Bereitstellen einer Metallpulverzusammensetzung gemäß einer der Ausführungsformen I - XXII,

b) Bereitstellen eines Substrats,

c) Auftragen der Metallpulverzusammensetzung auf das Substrat unter Erhalt einer ersten Pulverschicht,

d) selektives Schmelzen der aufgetragenen Metallpulverzusammensetzung unter Erhalt einer ersten Materialschicht,

e) Auftragen der Metallpulverzusammensetzung auf die erste Materialschicht unter Erhalt einer weiteren Pulverschicht,

f) selektives Schmelzen der aufgetragenen Pulverschicht unter Erhalt einer weiteren Materialschicht und

g) Wiederholen der Schritte e) und f) bis das Bauteil vollständig gefertigt ist.

XXVIII. Verwendung der Metallpulverzusammensetzung gemäß einer der Ausführungsformen I - XXII, in einem pulverbasierten additiven Fertigungsverfahren.

XXIX. Verwendung gemäß Ausführungsform XXVIII, wobei das pulverbasierte additive Fertigungsverfahren ausgewählt ist aus selektivem Laserschmelzen und selektivem Elektronenstrahlschmelzen.

**Definitionen**

Standardbedingungen:

Die Raumtemperatur entspricht 20 °C (+293K). Der Begriff Umgebungsdruck steht für einen Druck von 1013 hPa. Die Standardfeuchtigkeit beträgt im vorliegenden Zusammenhang 50% RH, wenn nicht anders angegeben.

Die im vorliegenden Zusammenhang genannten Bereiche umfassen die als Grenzen angegebenen Werte. Eine Angabe des Typs "im Bereich von X bis Y" in Bezug auf eine Größe A bedeutet also, dass A die Werte X, Y und Werte zwischen X und Y annehmen kann. Einseitig begrenzte Bereiche des Typs "bis Y" für eine Größe A beinhalten analog den Wert von Y und jene Werte, die kleiner als Y sind.

Wo nicht anders angegeben sind ppm-Angaben im Text als Gewichts-ppm zu Verstehen ($\mu$g/g).

**Detaillierte Beschreibung**

Ein erster Aspekt der Erfindung betrifft eine Metallpulverzusammensetzung, insbesondere zur Verwendung in einem additiven Fertigungsverfahren für ein Bauteil, enthaltend:

a) Metallpulver aufweisend eine Partikelgrößenverteilung mit einem $d_{10}$- Wert von 1 $\mu$m oder mehr und einem $d_{90}$- Wert von 200 $\mu$m oder weniger und

b) mindestens eine wasserlösliche Verbindung, wobei die Verbindung in festem Zustand vorliegt.

Die Erfindung betrifft eine Metallpulverzusammensetzung. Unter einer Metallpulverzusammensetzung bzw. einem Metallpulver soll bevorzugt ein Schüttgut aus Partikeln mit einer Partikelgröße im Nanometerbereich (1 nm - 999 nm) und/oder Mikrometerbereich (1 $\mu$m - 1000 $\mu$m) verstanden werden. Die Partikel weisen eine Partikelgrößenverteilung auf. Bevorzugt weist die Metallpulverzusammensetzung eine Fließrate im Bereich von 1 - 50 s/50 g gemessen mit einem Hall-Flowmeter auf (gemäß EN ISO 4490:2018).

Bevorzugt liegt der Wassergehalt (außer Kristallwasser in Form von Hydraten) der Metallpulverzusammensetzung im Bereich von 10 ppm bis 300 ppm. Durch die Verwendung von trockenen Metallpulverzusammensetzungen kann die Freisetzung von signifikanten Mengen von Lösungsmitteldämpfen während der additiven Fertigung verringert werden. Dadurch werden lose Partikel nicht von den entstehenden Dämpfen weggeblasen. Eine aus einer erfindungsgemäßen Metallpulverzusammensetzung hergestellte Pulverschicht kann daher in einem additiven Fertigungsprozess intakt bleiben.

Bevorzugt ist die Metallpulverzusammensetzung für ein additives Fertigungsverfahren, insbesondere ein Pulverbett-basiertes Fertigungsverfahren geeignet.

In einer Ausführungsform enthält das Metallpulver ein Metall, das ausgewählt ist aus der Gruppe bestehend aus Cu, V, Nb, Ta, Co, Cr, Mo, W, Ni, Fe, Ti, Al, Mg, Au, Pt, Re, Rh, Ru, Pd und Ag oder das Metallpulver besteht aus einem der vorgenannten Metalle. Besonders bevorzugt enthält das Pulver mindestens ein Element, das ausgewählt ist aus der Gruppe bestehend aus Kupfer, Silber und Gold, insbesondere besteht das Metallpulver aus einem der vorgenannten Elemente. In einer besonders bevorzugten Ausführungsform ist das Metallpulver ein Kupferpulver.

In einer Ausführungsform enthält das Metallpulver eine Legierung oder besteht aus einer Legierung. Bevorzugt weist die Legierung neben mindestens einem Metall aus dem vorherigen Absatz, mindestens ein weiteres Element auf, das ausgewählt ist aus der Gruppe bestehend aus Beryllium, Chrom, Eisen, Kobalt, Magnesium, Mangan, Nickel, Phosphor, Schwefel, Silber, Silizium, Tellur, Titan, Zink, Zinn und Zirconium.

In einer möglichen Ausführungsform weist das Metallpulver Sauerstoff auf, insbesondere in Form von Metalloxid. Im Rahmen der Erfindung kann der Sauerstoffgehalt mittels Elementaranalyse bestimmt werden. In manchen Fällen kann der Sauerstoffgehalt des Pulvers im Bereich von 10 ppm - 10.000 ppm liegen. Optional liegt der Sauerstoffgehalt des Pulvers im Bereich von 50 ppm - 500 ppm, z.B. wenn das Pulver unter Inertgasatmosphäre verdüst wurde, oder im Bereich von 1000 ppm- 8000 ppm, z.B. wenn das Pulver an Luft verdüst wurde.

In einer weiteren Ausführungsform besteht das Metallpulver aus Partikeln, wobei die Partikel sphärisch sind. Bevorzugt genügen mindestens 80% der Partikel des Metallpulvers der folgenden Bedingung:

$$0{,}8 \leq d_{min}/d_{max} \leq 1{,}0;$$

wobei $d_{min}$ der minimale Durchmesser und $d_{max}$ der maximale Durchmesser eines Partikels sind, gemessen mittels Raster Elektronenmikroskopie.

Das Metallpulver weist einen $d_{10}$ - Wert von 1 $\mu$m oder mehr auf. Insbesondere kann der $d_{10}$ - Wert 3 $\mu$m oder mehr, 5 $\mu$m oder mehr und ganz besonders bevorzugt 20 $\mu$m oder mehr betragen. Außerdem weist das erfindungsgemäße Pulver einen $d_{90}$-Wert von 200 $\mu$m oder weniger auf. Bevorzugt beträgt der $d_{90}$-Wert 150 $\mu$m oder weniger, insbesondere 100 $\mu$m oder weniger und ganz besonders bevorzugt 65 $\mu$m oder weniger. Typische Metallpulver weisen zum Beispiel Partikelgrößenverteilungen mit einem mittleren Teilchendurchmesser $d_{50}$ im Bereich von etwa 10 $\mu$m - 32 $\mu$m, etwa 10 $\mu$m - 45 $\mu$m, etwa 20 $\mu$m - 63 $\mu$m, etwa 45 $\mu$m - 100 $\mu$m, etwa 45 $\mu$m - 150 $\mu$m auf.

Weiterhin enthält die Metallpulverzusammensetzung mindestens eine wasserlösliche Verbindung. Unter "wasserlöslich" ist im Rahmen der Erfindung eine Verbindung zu verstehen, die bei Standardbedingungen eine Löslichkeit von mindestens 0,1 g/L, insbesondere mindestens 1 g/L und besonders bevorzugt mindestens 10 g/L aufweist. Optional kann die wasserlösliche Verbindung ein Salz sein. Besonders bevorzugt sind Ammoniumsalze. Das Salz kann in einer möglichen Ausführungsform als Hydrat, z.B. als Monohydrat oder Polyhydrat, vorliegen. Hydrate können das Aufschmelzverhalten von der Metallpulverzusammensetzung in additiven Fertigungsverfahren, z.B. SLM - Verfahren, verbessern.

Die wasserlösliche Verbindung kann beispielsweise eine kovalente Verbindung, ein Salz oder eine Metall-Komplexverbindung sein. In einer möglichen Ausführung geht die wasserlösliche Verbindung zumindest teilweise eine Verbindung mit dem Metall des Metallpulvers ein, wie z.B. eine Komplexverbindung.

In einer bevorzugten Ausführung der Erfindung weist die wasserlösliche Verbindung eine Absorptionsbande für elektromagnetische Strahlung im Wellenlängenbereich von 800 nm bis 10 $\mu$m auf, insbesondere im Wellenlängenbereich von 800 nm - 2000 nm. Eine wasserlösliche Verbindung mit einer solchen Absorptionsbande kann das Aufschmelzverhalten der Metallpulverzusammensetzung verbessern.

In einer Ausführungsform ist die wasserlösliche Verbindung ausgewählt aus organischen oder anorganischen Verbindungen. In dem Zusammenhang sind unter organischen Verbindungen solche zu verstehen, die der Kohlenstoff mit sich selbst und anderen Elementen eingeht. Davon ausgenommen sind Graphit und Diamant sowie systematisch alle zur anorganischen Chemie zählenden wasserstofffreien Chalkogenide des Kohlenstoffs (Kohlenstoffmonoxid, Kohlenstoffdioxid, Schwefelkohlenstoff), die Kohlensäure und Carbonate, die Carbide sowie die ionischen Cyanide, Cyanate und Thiocyanate. Unter anorganischen Verbindungen sind solche zu verstehen, die nicht unter die Definition für organische Verbindungen fallen. Wie für den Fachmann erkenntlich ist, kommen für die Metallpulverzusammensetzung nur wasserlösliche Verbindungen in Frage, die in wässriger Umgebung stabil sind. Weiterhin ist es vorteilhaft, wenn die wasserlösliche Verbindung bei Standardbedingungen nicht mit Sauerstoff reagiert.

In einer weiteren Ausführungsform weist die Metallpulverzusammensetzung zwei oder mehr wasserlösliche Verbindungen auf. Besonders bevorzugt weisen die zwei oder mehr wasserlöslichen Verbindungen mindestens eine organische und eine anorganische Verbindung auf.

Optional kann die wasserlösliche Verbindung eine organische Verbindung sein. Die Menge der organischen Verbindung ist erfindungsgemäß nicht weiter beschränkt. Vielmehr kann die Menge der organischen Verbindung in Abhängigkeit des verwendeten Metalls eingestellt werden. Metalle mit einer hohen Affinität für Sauerstoff können möglicherweise eine größere Menge der organischen Verbindung erfordern. Weiterhin kann die Menge der organischen Verbindung in Abhängigkeit vom Sauerstoffgehalt des verwendeten Metallpulvers eingestellt werden. Bevorzugt liegt die Menge der wasserlöslichen organischen Verbindung im Bereich von 100 ppm - 10000 ppm, insbesondere im Bereich von 1000 ppm - 7500 ppm, bezogen auf die Masse des Metallpulvers, z.B. wenn das Metallpulver der Zusammensetzung an Luft verdüst wurde. Besonders bevorzugt weist die Metallpulverzusammensetzung die wasserlösliche organische Verbindung in einer Menge von 3000 ppm-6000 ppm auf, bezogen auf die Masse des Metallpulvers. Alternativ kann die Menge der wasserlöslichen organischen Verbindung im Bereich von 100 ppm - 1000 ppm liegen, z.B. wenn das Metallpulver der Zusammensetzung unter Ausschluss von Luft verdüst wurde.

In einer weiteren Ausführung enthält die mindestens eine wasserlösliche Verbindung Stickstoff. Alternativ kann die wasserlösliche Verbindung frei von Stickstoff sein. Stickstoffhaltige Verbindungen können vorteilhaft sein, da sie beim Erhitzen rückstandsfrei zu gasförmigen Verbindungen (z.B. $CO_2$, $H_2O$, $N_2$) zersetzt werden können.

In einer bevorzugten Ausführungsform weist das molare Verhältnis von Kohlenstoff zu Stickstoff in der Summenformel der wasserlöslichen organischen Verbindung einen Wert im Bereich von 2:1 bis 5:1 auf.

In einer weiteren bevorzugten Ausführungsform weist das molare Verhältnis von Kohlenstoff zu Sauerstoff in der Summenformel der wasserlöslichen organischen Verbindung einen Wert im Bereich von 1:2 bis 3:1 auf.

Vorzugsweise ist die wasserlösliche organische Verbindung in der Lage mit dem Metall der Metallpulverzusammensetzung Komplexbindungen auszubilden. Beispielsweise kann die wasserlösliche organische Verbindung Kupfer komplexieren.

In einer möglichen Ausführungsform ist die wasserlösliche Verbindung eine organische Säure oder deren Salz. Beispiele für organische Säuren können ausgewählt sein aus Zitronensäure, Oxalsäure, Malonsäure, Bernsteinsäure, Weinsäure und Äpfelsäure.

In einer weiteren optionalen Ausführung kann die wasserlösliche Verbindung ausgewählt sein aus der Gruppe bestehend aus Ammoniumsalzen, Aminen und heterozyklischen aromatische Stickstoffverbindungen. In einer besonders bevorzugten Ausführungsform der Erfindung kann das Ammoniumsalz ein Ammoniumsalz eines Amins sein, zum Beispiel Diammonium-EDTA (Ethylendiamintetraacetat). Ganz besonders bevorzugt liegt die Menge von Diammonium-EDTA im Bereich von 1500 ppm - 6500 ppm oder 100 ppm - 1000 ppm. In einer möglichen Ausführung der Erfindung kann das Amin eine Aminosäure sein.

Erfindungsgemäß weist die Metallpulverzusammensetzung eine wasserlösliche Verbindung auf. Optional kann die wasserlösliche Verbindung eine anorganische Verbindung sein. Die Menge der anorganischen Verbindung ist erfindungsgemäß nicht weiter beschränkt. Vielmehr ist die Menge der anorganischen Verbindung in Abhängigkeit des verwendeten Metalls einzustellen. Metalle mit einer hohen Affinität für Sauerstoff können möglicher Weise eine größere Menge der anorganischen Verbindung erfordern. Weiterhin kann die Menge der anorganischen Verbindung in Abhängigkeit vom Sauerstoffgehalt des verwendeten Metallpulvers eingestellt werden. Bevorzugt liegt die Menge der wasserlöslichen anorganischen Verbindung im Bereich von 50 ppm - 5000 ppm, insbesondere im Bereich von 500 ppm - 2000 ppm, bezogen auf die Masse des Metallpulvers.

Bevorzugt wirkt die anorganische Verbindung beim Schmelzen der Metallpulverzusammensetzung als Flussmittel. Als Flussmittel können solche Stoffe verstanden werden, die mit Oxiden auf der Partikeloberfläche des Metallpulvers Verbindungen eingehen können. Weiterhin können Flussmittel einen Film, z.B. einen flüssigen Film, über einer Metallschmelze bilden, der die Schmelze vor Oxidation schützt.

In einer weiteren Ausführungsform ist die anorganische Verbindung ausgewählt aus wasserlöslichen, borhaltigen Verbindungen. Besonders bevorzugt sind borhaltigen Salze. Insbesondere ist das borhaltige Salz ein Ammoniumsalz, wie zum Beispiel Ammonium-pentaborat.

In einer besonders bevorzugten Ausführungsform weist die Metallpulverzusammensetzung ein borhaltiges Ammoniumsalz und ein organisches Ammoniumsalz auf. Das organische Ammoniumsalz liegt in dieser Metallpulverzusammensetzung bevorzugt in einer Menge von 3000 ppm - 6000 ppm vor, bezogen auf das Gewicht des Metallpulvers. Das borhaltige Ammoniumsalz liegt in dieser Metallpulverzusammensetzung bevorzugt in einer Menge von 500 ppm - 2500 ppm vor, bezogen auf das Gewicht des Metallpulvers.

In einer weiteren Ausgestaltung der Erfindung liegt das Verhältnis von organischer Verbindung und anorganischer Verbindung im Bereich von 3:1 bis 50:1.

In einer bevorzugten Weiterbildung der Erfindung weist die Metallpulverzusammensetzung Schwefel auf. Insbesondere kann der Schwefel in Form von Sulfationen vorliegen.

Die Menge an Schwefel ist erfindungsgemäß nicht beschränkt. Bevorzugt liegt die Menge an Schwefel, insbesondere in Form von Sulfat, in der Metallpulverzusammensetzung im Bereich von 1 ppm - 100 ppm.

Die erfindungsgemäße Metallpulverzusammensetzung weist zumindest Metallpulver und eine wasserlösliche Verbindung auf. In einer möglichen Ausführungsform ist die wasserlösliche Verbindung mit den Metallpartikeln des Metallpulvers verbunden. Insbesondere kann die wasserlösliche Verbindung auf der Oberfläche der Metallpartikel des Metallpulvers vorliegen, z.B. in Form einer Schicht oder als anhaftende Partikel. Alternativ kann die wasserlösliche Verbindung auch getrennt von den Metallpartikeln des Metallpulvers vorliegen, insbesondere in Form von Mikro- oder Nanopartikeln. Mikropartikel weisen einen mittleren Partikeldurchmesser $d_{50}$ im Bereich von 1 - 999 $\mu$m auf. Nanopartikel weisen eine mittleren Partikeldurchmesser $d_{50}$ im Bereich von 1 - 999 nm auf. In einer möglichen Ausführungsform weisen die Partikel der wasserlöslichen Verbindung eine Partikelgrößenverteilung $d_{50}$ auf, die im Bereich 1 - 100 $\mu$m liegt.

Bevorzugt sind das Metallpulver und die mindestens eine wasserlösliche Verbindung in der Metallpulverzusammensetzung gleichmäßig miteinander vermischt und es gibt somit keine lokalen Konzentrationsunterschiede innerhalb der Metallpulverzusammensetzung.

In einem zweiten Aspekt betrifft die Erfindung ein Verfahren zur Herstellung einer erfindungsgemäßen Metallpulverzusammensetzung aufweisend die Schritte:

a) Bereitstellen eines Metallpulvers aufweisend eine Partikelgrößenverteilung mit einem $d_{10}$- Wert von 1 $\mu$m oder mehr und einem $d_{90}$- Wert von 200 $\mu$m oder weniger,
b) Bereitstellen einer wässrigen Lösung aufweisend mindestens eine wasserlösliche Verbindung,
c) Mischen der wässrigen Lösung mit dem Pulver unter Erhalt einer Mischung, und
d) Trocknen der Mischung unter Erhalt der Metallpulverzusammensetzung.

Durch die Verwendung von wasserlöslichen Verbindungen kann das Risiko im Umgang mit organischen Lösungsmitteln vermieden werden. Weiterhin stellt die Verwendung von wässrigen Lösungen eine vergleichsweise geringe Umweltbelastung dar. Die Verwendung von wasserlöslichen Verbindungen eröffnet die Möglichkeit polare Verbindungen in Metallpulverzusammensetzungen einzubringen. Üblicher Weise werden Metallpartikel mit wasserunlöslichen Substanzen wie Fettsäure beschichtet, um eine Agglomeration zu vermeiden. Fettsäuren haben jedoch den Nachteil, dass sie auf Grund ihres hohen Kohlenstoffgehalts zur unvollständigen Verbrennung neigen. Weiterhin stellen Rückstände von Wasser in der Metallpulver kein Problem dar, da diese im Zuge eines additiven Fertigungsverfahrens rückstandsfrei entfernt werden können. Dies ist bei organischen Lösungsmitteln nur begrenzt möglich, da bei unvollständiger Verbrennung Ruß entstehen kann.

Bevorzugt weist die Verbindung in wässriger Lösung eine Absorption von elektromagnetischer Strahlung im Wellenlängenbereich von 800 nm - 10 $\mu$m auf.

Besonders bevorzugt ist die Verbindung in der wässrigen Lösung vollständig gelöst. In einer bevorzugten Ausführung enthält die wasserlösliche Verbindung in einer Konzentration von 0,005 - 10 mol/L, insbesondere in einer Konzentration von 0,1 - 5 mol/L. Die Gesamtmenge der wasserlöslichen Verbindung in Lösung, die mit dem Pulver gemischt wird, beträgt bevorzugt 100 - 8000 ppm, insbesondere 1000 - 5000 ppm bezogen auf das Gewicht des bereitgestellten Metallpulvers.

In einer Ausführungsform erfolgt das Mischen durch mindestens ein Verfahren, das ausgewählt ist aus der Gruppe bestehend aus Rühren, Verreiben, Vermahlen, Schütteln, Schleudern und Umwälzen.

Das Gewicht der wasserlöslichen Verbindung in der erfindungsgemäßen Metallpulverzusammensetzung entspricht bevorzugt dem Gewicht des Feststoffanteils der wasserlöslichen Verbindung in der Lösung mit einer Genauigkeit von 90% oder mehr. Verluste können möglicher Weise durch die Verfahrensführung, z.B. durch Anhaften an Gefäßwänden entstehen.

In einer weiteren Ausführungsform weist die Lösung mindestens eine Substanz auf, die ausgewählt ist aus der Gruppe bestehend aus Schwefelsäure und Sulfat-Salzen, insbesondere einem korrespondierend Metall-Sulfat zu dem Metallpulver. Zum Beispiel enthält die Lösung Kupfersulfat, wenn das Metallpulver Kupfer enthält.

Bevorzugt enthält die Lösung mindestens eine wasserlösliche Verbindung, die im Rahmen der Erfindung für die Metallpulverzusammensetzung beschrieben ist.

Die Trocknung der Mischung kann beispielsweise bei Temperaturen im Bereich von 50°C - 95°C erfolgen oder bei Raumtemperatur. Optional kann die Trocknung unter Atmosphärendruck oder bei einem Druck von 1 mbar - 900 mbar erfolgen, z.B. in eine Vakuum-Trockenkammer bei 10 mbar - 700 mbar.

In einem dritten Aspekt betrifft die Erfindung die Verwendung der erfindungsgemäßen Metallpulverzusammensetzung für ein additives Fertigungsverfahren. Das additive Fertigungsverfahren kann zumindest die folgenden die Schritte aufweisen:

a) Bereitstellen einer erfindungsgemäßen Metallpulverzusammensetzung,
b) Bereitstellen eines Substrats,
c) Auftragen der Metallpulverzusammensetzung auf das Substrat unter Erhalt einer ersten Pulverschicht,
d) selektives Schmelzen der aufgetragenen Metallpulverzusammensetzung in definierten Bereichen der Pulverschicht unter Erhalt einer ersten Materialschicht,
e) Auftragen der Metallpulverzusammensetzung auf die erste Materialschicht unter Erhalt einer weiteren Pulverschicht,
f) selektives Schmelzen der aufgetragenen Metallpulverzusammensetzung in definierten Bereichen der weiteren Pulverschicht unter Erhalt einer weiteren Materialschicht.
g) Optionales Wiederholen der Schritte e) und f) bist das Bauteil vollständig aufgebaut ist.

Das selektive Schmelzen ist bevorzugt ein selektives Laserschmelzen (SLM) oder ein Elektronenstrahlschmelzen (EBM).

Das Auftragen der Metallpulverzusammensetzung auf einem Substrat erfolgt unter Bedingungen, die dem Fachmann im Rahmen eines additiven Fertigungsverfahrens bekannt sind. Bei dem Substrat kann es sich um die noch unbeschichtete Bauplatte im Bauraum einer additiven Fertigungsvorrichtung oder alternativ um zuvor bereits auf der Bauplatte abgeschiedene Materialschichten des herzustellenden Bauteils und/oder einer Stützstruktur handeln. Das schichtförmige Auftragen des pulverförmigen Metalls erfolgt beispielsweise durch eine Rakel, eine Walze, eine Presse oder durch Siebdruck oder eine Kombination aus mindestens zwei dieser Methoden.

Die Metallpulverzusammensetzung kann optional nach dem Auftragen jeweils einem Vorheizen unterzogen werden, beispielsweise unter Verwendung eines defokussierten Laserstrahls. Durch das Vorheizen wird gegebenenfalls die aufgetragene Pulverschicht zumindest teilweise versintert. Anschließend erfolgt dann das Aufschmelzen der Metallpulverzusammensetzung in definierten Bereichen der jeweiligen Schicht.

Das Aufschmelzen der Metallpulverzusammensetzung in definierten Bereichen einer Schicht erfolgt üblicherweise mit einem fokussierten Laserstrahl oder Elektronenstrahl. Mit dem Begriff "in definierten Bereichen" wird bekanntermaßen zum Ausdruck gebracht, dass im Rahmen der additiven Fertigung digitale 3D-Daten des Formkörpers die Bereiche einer Schicht, die aufgeschmolzen werden sollen, vorgeben.

Erfindungsgemäß sind die Parameter für das Schmelzen nicht weiter festgelegt. Die Parameter Laserleistung, Scangeschwindigkeit, Linienbreite und Linienabstand sind vom Fachmann für additive Fertigung entsprechend der jeweiligen Metallpulverzusammensetzung und den Anforderungen an das zu fertigende Bauteil einzustellen.

In einer Ausführungsform liegt die Laserleistung im Bereich von 50 W - 500 W. Die Scangeschwindigkeit liegt beispielsweise im Bereich von 10 mm/s-1000 mm/s, insbesondere im Bereich von 100 mm/s - 500 mm/s.

Die Linienbreite kann bevorzugt 100 $\mu$m - 500 $\mu$m betragen. Im Rahmen der Erfindung liegt der Hatch-Abstand (Abstand zwischen zwei benachbarten Linien) im Bereich von 20 $\mu$m - 200 $\mu$m.

Die Schichtdicke soll bevorzugt, technisch bedingt nicht signifikant kleiner sein als der $d_{50}$ Durchmesser der Partikel des Metallpulvers. Typische Schichtdicken der Pulverschicht liegen im zum Beispiel Bereich von 10 $\mu$m - 100 $\mu$m, insbesondere im Bereich von 15 $\mu$m - 50 $\mu$m.

In einer bevorzugten Ausführung findet das selektive Schmelzen der Pulverschicht in einer Schutzgasatmosphäre aus Argon statt. Der Sauerstoffgehalt der Schutzgasatmosphäre liegt bevorzugt im Bereich von 0,2 - 0,8 Vol.-%.

Durch das selektive Schmelzen der aufgetragenen Metallpulverzusammensetzung entsteht eine zusammenhängende Materialschichten. Die Materialschicht entsteht insbesondere dadurch, dass nach dem selektiven, insbesondere lokalen, Schmelzen der Partikel die flüssige Schmelze erkaltet und erstarrt.

Mit dem erfindungsgemäßen Verfahren lassen sich Bauteile herstellen, die eine optische Dichte von 95 % oder mehr und insbesondere 97 % oder mehr aufweisen.

Durch Verwendung der erfindungsgemäßen Metallpulverzusammensetzung in einem additiven Fertigungsverfahren kann das Schmelzverhalten gegenüber unbehandelten Metallpulvern deutlich verbessert werden.

Des Weiteren ist es möglich, dass durch die Verwendung der erfindungsgemäßen Metallpulverzusammensetzung der Sauerstoffgehalt im Bauteil reduziert werden kann im Vergleich zu Bauteilen, die aus unbehandelten Metallpulvern hergestellt werden.

Messmethoden

Fließfähigkeit von Pulvern

Die Fließfähigkeit von Metallpulvern und Metallpulverzusammensetzungen im Rahmen der vorliegenden Erfindung wurde mit der Hall Flow-Methode mithilfe eines Hall Flow Meters der Firma Impact Innovation gemessen (gemäß DIN EN ISO 4490:2018-08). Das Gerät wurde, wurde mit 50 g chinesischem Schmirgelkorn (Referenzpulver nach DIN-EN-ISO-4490) kalibriert. Nach der Kalibrierung erfolgte die Probenmessung. Die Messungen wurde mindestens zehnmal mit jeweils 50 g Probemenge wiederholt.

Elementar-Analyse

Elementar-Analyse der Element C, O, H, N und S erfolgt mittels Trägergas-Heißextraktion mit angeschlossener ICP-OES.

Aufschmelzverhalten

Das Aufschmelzverhalten wurde mithilfe von lichtmikroskopischen Aufnahmen optisch bewertet nach VDI 3405 Blatt 2.3.

Partikelgrößenverteilung

Die Partikelgrößenverteilung kann durch Laserbeugung gemäß ISO 13320:2009 mit dem Gerät "Helos BR/R3" (Sympatec GmbH, Deutschland) bestimmt werden. Der Messbereich beträgt dabei in Abhängigkeit von den im Pulver vorliegenden Partikelgrößen entweder 0,9 - 875 $\mu$m. Für die Dispergierung der Pulverpartikel kann das Trockendispergiersystem RODODS/M (Sympatec GmbH, Deutschland) mit Schwingrinnendosierer VIBRI (mit VenturiDüse) verwendete werden. Die Probenmenge beträgt dabei 5 g. Die Wellenlänge der verwendeten Laserstrahlung beträgt 632,8 nm. Die Auswertung kann mit Hilfe der Mie-Theorie erfolgen. Die Partikelgrößen werden als Volumenverteilung erhalten, d.h. im Rahmen der vorliegenden Erfindung wird die Partikelgrößenverteilung in Form einer Volumenverteilungssummenkurve bestimmt. Aus der durch Laserbeugung gemessenen Partikelgrößenverteilung (Volumenverteilung) können, wie in der ISO 9276-2:2014 beschrieben, die $d_{10}$ und $d_{90}$- Werte berechnet werden.

Porosität

Die Porosität ergibt sich gemäß der folgenden Gleichung:

$$\text{Porosität P (in \%)} = (1 - (\rho_{geo} / \rho_{th})) \times 100\%,$$

wobei

$\rho_{geo}$ die geometrische Dichte des Bauteils und $\rho_{th}$ die theoretische Dichte des Bauteils ist.

Die geometrische Dichte kann nach dem Archimedes-Prinzip, beispielsweise mit einer hydrostatischen Waage, ermittelt werden. Die theoretische Dichte des Bauteils entspricht der theoretischen Dichte des Materials, aus dem das Bauteil gebildet ist. Die relative Dichte $D_{rel}$ (in %) ergibt sich aus ($\rho_{geo} / \rho_{th}$) x 100%.

**Beispiele**

**Beispiel 1**

Es wurden gemäß Tabelle 1 die folgenden Lösungen für Ammonium-Pentaborat (ABP), Diammonium-EDTA (DA-EDTA) und Schwefelsäure ($H_2SO_4$) angesetzt.

*Tabelle 1*

| Lösung | Verbindung | Konzentration [mol/L] |
|---|---|---|
| 1 | ABP | 0,15 |
| 2 | DA-EDTA | 0,58 |
| 3 | $H_2SO_4$ | 0,024 |

Die Lösungen wurden mit legierten Kupferpulvern mit einer Partikelgrößenverteilung $d_{10}$ von 10 $\mu$m und $d_{90}$ von 45 $\mu$m vermischt, so dass die folgenden Metallpulverzusammensetzungen 1-3 in Tabelle 2 erhalten wurden. Pulver 4 ist unbeschichtetes Pulver und dient als Referenz.

*Tabelle 2*

| Pulver-zusammensetzung | CuSn10 [g] | APB-Menge $\mu$g/g | DA-EDTA [$\mu$g/g] | $H_2SO_4$ [$\mu$g/g] |
|---|---|---|---|---|
| 1 | 500 | 1600 | 5000 | - |
| 2 | 500 | 1600 | 5000 | 60 |
| 3 | 500 | 500 | 5000 | - |
| 4 | 500 | - | - | - |

Aus dem hergestellten Metallpulverzusammensetzungen wurden mittels selektivem Laserschmelzen Würfel mit eine Kantenlänge von 1 cm hergestellt. Die Scanparameter wurden folgendermaßen eingestellt (Scangeschwindigkeit 100 mm/s; Laserleistung 100 W).

*Tabelle 3*

| Versuch | Pulver. | Sauerstoffgehalt vorher [ppm] | Sauerstoffgehalt nachher [ppm] | Porosität [%] |
|---|---|---|---|---|
| 1 | 1 | 8466 | 4350 | 1,28 |
| 2 | 2 | 8399 | 4212 | 1,5 |
| 3 | 3 | 7515 | 4468 | 8 |
| 4 | 4 | 5744 | 5805 | 11 |

Wie zu erkennen ist, lassen sich mit den erfindungsgemäßen Metallpulverzusammensetzungen mittels SLM Bauteile fertigen, die eine deutlich geringer Porosität aufweisen und einen geringeren Sauerstoffanteil als die Bauteile aus unbeschichteten Metallpulvern.

**Beispiel 2**

In weiteren Versuchen wurden diverse Pulverzusammensetzungen mit wasserlöslichen Verbindungen hergestellt. Das Aufschmelzverhalten im SLM-Verfahren wurde mit einem optischen Mikroskop bewertet. Die Scanparameter wurden analog zu Beispiel 1 gewählt.

*Tabelle 4:*

| Pulver-zusammensetzung | CuSn10 [g] | Zitronensäure [$\mu$g/g] | Oxalsäure [$\mu$g/g] | Alanin [$\mu$g/g] | Borsäure [$\mu$g/g] | Aufschmelzverhalten |
|---|---|---|---|---|---|---|
| 5 | 500 | 5000 | 0 | 0 | 0 | + |
| 6 | 500 | 0 | 5000 | 0 | 200 | ++ |
| 7 | 500 | 0 | 0 | 5000 | 0 | + |
| 8 | 500 | 0 | 0 | 0 | 0 | - |
| Legende Aufschmelzverhalten: <br> - (keine zusammenhängende Materialschicht), + (lose verbundene Inseln einer Materialschicht), ++ (zusammenhängende Materialschicht mit wenigen defekten) | | | | | | |

**Patentansprüche**

1. Metallpulverzusammensetzung enthaltend:

   a) Metallpulver aufweisend eine Partikelgrößenverteilung mit einem $d_{10}$- Wert von 1 $\mu$m oder mehr und einem $d_{90}$- Wert von 200 $\mu$m oder weniger und
   b) mindestens eine wasserlösliche Verbindung, wobei die Verbindung in festem Zustand vorliegt.

2. Metallpulverzusammensetzung gemäß Anspruch 1, wobei die mindestens eine wasserlösliche Verbindung ausgewählt ist aus der Gruppe bestehend aus organischen und anorganischen Verbindungen.

3. Metallpulverzusammensetzung gemäß einem der Ansprüche 1 oder 2, wobei die Metallpulverzusammensetzung zwei oder mehr wasserlösliche Verbindungen aufweist und wobei die zwei oder mehr wasserlöslichen Verbindungen mindestens eine organische und eine anorganische Verbindung aufweisen.

4. Metallpulverzusammensetzung gemäß einem der Ansprüche 2 oder 3, wobei die mindestens eine wasserlösliche organische Verbindung eine organische Säure oder deren Salz ist.

5. Metallpulverzusammensetzung gemäß einem der Ansprüche 1 - 4, wobei die mindestens eine wasserlösliche Verbindung eine stickstoffhaltige Verbindung ist, die ausgewählt ist aus der Gruppe bestehend aus Ammoniumsalzen, Aminen und heterozyklischen aromatische Stickstoffverbindungen.

6. Metallpulverzusammensetzung gemäß einem der Ansprüche 1 - 5, wobei die wasserlösliche Verbindung ein Salz oder einen Metallkomplex aufweist.

7. Metallpulverzusammensetzung gemäß einem der Ansprüche 2 -6, wobei die mindestens eine anorganische Verbindung ausgewählt ist aus wasserlöslichen, borhaltigen Verbindungen, insbesondere borhaltigen Salzen.

8. Metallpulverzusammensetzung gemäß einem der Ansprüche 1 - 7, wobei Metallpulverzusammensetzung ein borhaltiges Ammoniumsalz und ein organisches Ammoniumsalz aufweist.

9. Metallpulverzusammensetzung gemäß einem der Ansprüche 1 - 8, wobei die Metallpulverzusammensetzung Schwefel aufweist.

10. Metallpulverzusammensetzung gemäß einem der Ansprüche 1 - 9, wobei die Metallpartikel des Metallpulvers ein Metall aufweisen, das ausgewählt ist aus der Gruppe bestehend aus Cu, V, Nb, Ta, Co, Cr, Mo, W, Ni, Fe, Ti, Al, Mg, Au, Pt, Re, Rh, Ru, Pd und Ag oder aus einem der vorgenannten Metalle bestehen.

11. Metallpulverzusammensetzung gemäß Anspruch 10, wobei die Metallpartikel des Metallpulvers eine Legierung aufweisen und die Legierung mindestens ein Element aufweist, das ausgewählt ist aus der Gruppe bestehend aus Beryllium, Chrom, Eisen, Kobalt, Magnesium, Mangan, Nickel, Phosphor, Schwefel, Silber, Silizium, Tellur, Titan, Zink, Zinn und Zirconium.

12. Metallpulverzusammensetzung gemäß einem der Ansprüche 1 - 11, wobei mindestens 80% der Partikel des Metallpulvers der folgenden Bedingung genügen:

$$0,8 \leq d_{min}/d_{max} \leq 1,0;$$

wobei $d_{min}$ der minimale Durchmesser und $d_{max}$ der maximale Durchmesser eines Partikels sind.

13. Metallpulverzusammensetzung gemäß einem der Ansprüche 1 - 12, wobei die mindestens eine wasserlösliche Verbindung eine Absorptionsbande für elektromagnetischer Strahlung im Wellenlängenbereich von 800 nm - 10 $\mu$m aufweist.

14. Verfahren zur Herstellung einer Metallpulverzusammensetzung gemäß einem der Ansprüche 1- 13 aufweisend die Schritte:

    a) Bereitstellen eines Metallpulvers aufweisend eine Partikelgrößenverteilung mit einem $d_{10}$- Wert von 1 $\mu$m oder mehr und einem $d_{90}$- Wert von 200 $\mu$m oder weniger,
    b) Bereitstellen einer wässrigen Lösung aufweisend mindestens eine vollständig gelöste Verbindung,
    c) Mischen der Lösung mit dem Pulver unter Erhalt einer Mischung, und
    d) Trocknen der Mischung unter Erhalt der Metallpulverzusammensetzung.

15. Additives Fertigungsverfahren zur Herstellung eines Bauteils aufweisend die Schritte:

a) Bereitstellen einer Metallpulverzusammensetzung gemäß einem der Ansprüche 1 - 13,

b) Bereitstellen eines Substrats,

c) Auftragen der Metallpulverzusammensetzung auf das Substrat unter Erhalt einer ersten Pulverschicht,

d) selektives Schmelzen der aufgetragenen Metallpulverzusammensetzung unter Erhalt einer ersten Materialschicht,

e) Auftragen der Metallpulverzusammensetzung auf die erste Materialschicht unter Erhalt einer weiteren Pulverschicht,

f) selektives Schmelzen der aufgetragenen Metallpulverzusammensetzung unter Erhalt einer weiteren Materialschicht,

g) Wiederholen der Schritte e) und f) bist das Bauteil vollständig aufgebaut ist.

16. Verwendung der Metallpulverzusammensetzung gemäß einem der Ansprüche 1 - 13, in einem pulverbasierten additiven Fertigungsverfahren.

17. Verwendung gemäß Anspruch 16, wobei das pulverbasierte additive Fertigungsverfahren ausgewählt ist aus selektivem Laserschmelzen oder selektivem Elektronenstrahlschmelzen ist.

**Europäisches Patentamt**
**European Patent Office**
**Office européen des brevets**

# EUROPÄISCHER RECHERCHENBERICHT

Nummer der Anmeldung

EP 20 16 2653

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 3 479 929 A1 (HERAEUS ADDITIVE MFG GMBH [DE]) 8. Mai 2019 (2019-05-08) * Absätze [0028], [0029], [0037] * * Ansprüche 1-7 * ----- | 1-17 | INV. B22F1/00 B22F3/105 |
| Y | EP 3 360 627 A1 (HERAEUS ADDITIVE MFG GMBH [DE]) 15. August 2018 (2018-08-15) * Absätze [0007], [0034], [0035] * * Ansprüche 1-9 * ----- | 1-17 | |

RECHERCHIERTE SACHGEBIETE (IPC)

B22F
C22C

Der vorliegende Recherchenbericht wurde für alle Patentansprüche erstellt

| Recherchenort | Abschlußdatum der Recherche | Prüfer |
|---|---|---|
| Den Haag | 31. Juli 2020 | Gomes Pinto F., R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 16 2653

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2020

| Im Recherchenbericht angeführtes Patentdokument | | Datum der Veröffentlichung | Mitglied(er) der Patentfamilie | | Datum der Veröffentlichung |
|---|---|---|---|---|---|
| EP 3479929 | A1 | 08-05-2019 | EP | 3479929 A1 | 08-05-2019 |
| | | | WO | 2019091827 A1 | 16-05-2019 |
| | | | | | |
| EP 3360627 | A1 | 15-08-2018 | CN | 110167698 A | 23-08-2019 |
| | | | EP | 3360627 A1 | 15-08-2018 |
| | | | JP | 2020505504 A | 20-02-2020 |
| | | | KR | 20190109456 A | 25-09-2019 |
| | | | TW | 201831332 A | 01-09-2018 |
| | | | US | 2020230695 A1 | 23-07-2020 |
| | | | WO | 2018145824 A1 | 16-08-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **W.J. SAMES et al.** *International Materials Reviews,* 2016, vol. 61, 1-46